# FASCICULE DE BREVET EUROPEEN

(11) **EP 0 873 180 B1**
(45) Date de publication et mention de la délivrance du brevet: **25.08.1999**
(21) Numéro de dépôt: 96934956.2
(22) Date de dépôt: 23.10.1996
(51) Int. Cl.: B01J 2/04

(54) **GRANULES REDISPERSABLES DANS L'EAU COMPRENANT UNE MATIERE ACTIVE SOUS FORME LIQUIDE**
IN WASSER REDISPERGIERBARE GRANULATE MIT EINER FLÜSSIGE AKTIVE STOFF
WATER-REDISPERSIBLE GRANULES INCLUDING A LIQUID ACTIVE MATERIAL

(30) Priorité: 25.10.1995 FR 9512586; 31.01.1996 FR 9601123
(43) Date de publication de la demande: 28.10.1998
(73) Titulaire: RHODIA CHIMIE, 92408 Courbevoie Cédex (FR)
(72) Inventeur: GUERIN, Gilles, F-95600 Eaubonne (FR); MORVAN, Mikel, F-92400 Courbevoie (FR)
(74) Mandataire: Wattremez, Catherine
(86) Numéro de dépôt international: FR9601654
(87) Numéro de publication internationale: WO9715386

(56) Documents cités:
- EP-A- 0 550 276
- WO-A-94/09058
- DATABASE WPI Derwent Publications Ltd., London, GB; AN 81-50852d XP002008368 & JP,A,56 061 497 (NIPPON SURFACTANT KK) , 26 Mai 1981

## Description

La présente invention a pour objet des granulés redispersables dans l'eau comprenant une matière active sous forme liquide.

Dans certains domaines, comme par exemple ceux de l'alimentaire, de la cosmétique ou encore des peintures, on est conduit à préparer des formulations à partir de matières actives sous la forme de liquide hydrophobe. L'une des possibilités de formulation est de préparer des émulsions huile dans eau de telles matières.

Cependant, on se trouve en face de problèmes liés à la stabilité au stockage de ces émulsions. En effet, il est courant de constater une séparation de phase plus ou moins importante des constituants de l'émulsion. En outre, on peut être confronté à des problèmes de désactivation de la matière active, ladite matière active pouvant se dégrader par hydrolyse lors du stockage.

Enfin, il n'est pas à négliger le fait que pour être facilement manipulables et pompables, de telles formulations présentent des teneurs relativement peu élevées en matière active et une quantité d'eau importante.

La présente invention a donc pour objectif de proposer une alternative originale aux problèmes mentionnés ci-dessus en ce sens que les formulations proposées sont des poudres pouvant contenir des concentrations élevées en matière active initialement sous forme liquide hydrophobe.

Ainsi, elle a pour objet des granulés redispersable dans l'eau, obtenus par mélange puis séchage d'au moins une matière active, d'au moins un tensio-actif principal, d'au moins un composé hydrosoluble et comprenant :
- au moins une matière active sous forme de liquide hydrophobe,
- au moins un tensio-actif principal dont le diagramme de phases binaire eau - tensio-actif, comporte une phase isotrope fluide à 25°C jusqu'à une concentration d'au moins 50 % en poids de tensio-actif, suivie, à des concentrations supérieures, d'une phase cristal liquide de type hexagonale, cubique ou lamellaire stable au moins jusqu'à 65°C,
- au moins un composé hydrosoluble.

Ladite invention a plus particulièrement pour objet des granulés redispersables dans l'eau, obtenus par séchage d'une émulsion huile dans eau comprenant :
- au moins une matière active sous forme de liquide hydrophobe,
- au moins un composé hydrosoluble susceptible de former au cours de l'opération de séchage un film continu solide emprisonnant les gouttelettes de matière active hydrophobe
- de l'eau
- et au moins un agent tensio-actif principal dont le diagramme de phases binaire eau-agent tensio-actif, comporte une phase isotrope fluide à 25°C jusqu'à une concentration d'au moins 50 % en poids de tensio-actif, suivie à des concentrations supérieures, d'une phase cristal liquide de type hexagonale, cubique ou lamellaire stable au moins jusqu'à 65°C.

Les granulés selon la présente invention présentent de nombreux avantages.

Tout d'abord, leur mise en forme permet d'éviter tous les problèmes dus à l'emploi d'émulsions. Ainsi, les problèmes d'instabilité au stockage sont évités, tels que notamment le crémage, la floculation, le mûrissement et la coalescence. Ces différents phénomènes sont décrits dans "ENCYCLOPEDIA of EMULSIONS TECHNOLOGY", volume 1 par Paul BECHER aux éditions MARCEL DEKKER INC., 1983.

Un autre avantage de la présente invention est que les concentrations en matières actives peuvent être très élevées en comparaison avec les émulsions. Par conséquent, lors de l'utilisation de ces granulés, une plus faible quantité de granulés sera suffisante.

Par ailleurs, la mise en forme selon l'invention permet de résoudre le problème de la désactivation de la matière active lorsque celle-ci est sensible à l'hydrolyse.

La présente invention permet aussi de disposer d'une préformulation sous forme de granulés, donc plus facilement utilisable que des émulsions par exemple, dans le cas où ladite préformulation est ajoutée à une formulation en poudre.

En outre, les granulés selon l'invention, préparés à partir d'une émulsion, présentent l'avantage de se redisperser spontanément dans l'eau, pour donner à nouveau une émulsion présentant une granulométrie voisine de celle de l'émulsion initiale.

Enfin, la présente invention propose une solution aux problèmes de la mise en forme de produits liquides qui sont habituellement formulés par absorption sur un support. Ces formulations sont souvent peu concentrées en matière active et il peut se produire une séparation de phases entre le support et la matière active par migration de la matière active au cours du stockage.

Mais d'autres avantages et caractéristiques apparaîtront plus clairement à la lecture de la description et des exemples qui vont suivre.

Ainsi que cela a été indiqué auparavant, les granulés selon l'invention comprennent au moins une matière active sous la forme d'un liquide hydrophobe.

Toutes les matières actives conviennent à l'invention dans la mesure où elles se présentent à température ambiante sous forme de liquide non miscible dans l'eau, ou très faiblement miscible dans l'eau, ou encore sous une forme solubilisée dans un solvant organique faiblement ou non miscible dans l'eau.

Par faiblement miscible, on entend des matières actives ou les solvants dont la solubilité dans l'eau ne dépasse pas 10 % en poids.

Par la suite, on entendra par matière active, soit la matière active pure, soit la matière active solubilisée dans un solvant, soit un solvant.

A titre d'exemple de matières actives dans le domaine de l'alimentaire, on peut citer les mono-, di- et triglycérides, les huiles essentielles, les arômes, les colorants.

A titre d'exemple de matières actives dans le domaine de la cosmétique on peut citer les huiles silicones appartenant par exemple à la famille des diméthicones.

A titre d'exemple de matières actives convenables pour la réalisation de l'invention, dans le domaine des peintures, on peut citer les résines alkydes, les résines époxy, les isocyanates bloqués ou non.

Dans le domaine du papier, on peut citer à titre d'exemple les résines de collage et d'hydrofugation telles que le dimère d'alkylcétène (AKD) ou l'anhydride alcényle succinique (ASA).

Dans le domaine de la détergence, on peut mentionner en tant que matière active possible les agents suppresseurs de mousse tels que
. les hydrocarbures saturés ou insaturés aliphatiques, alicycliques, aromatiques ou hétérocycliques, tels que les paraffines, les cires
. les monostéarylphosphates, les monostéaryl alcool phosphates
. les huiles ou résines polyorganosiloxanes éventuellement combinées avec des particules de silice.

Il est de même possible d'utiliser des matières actives telles que les lubrifiants pour le travail ou la déformation des matériaux.

Lorsque la matière active est un solvant ou un mélange de solvants, on met en oeuvre des solvants pas ou peu miscibles dans l'eau au sens précédemment indiqué. Parmi les solvants susceptibles d'être utilisés, on peut citer les solvants mis en oeuvre pour le nettoyage ou le décapage, tels que les coupes pétrolières aromatiques, les composés terpéniques comme le D-limonène, ou encore le L-limonène, ainsi que les solvants comme le Solvesso® (coupe pétrolière comprenant un mélange de composés aromatiques, riche en naphtalènes, commercialisé par la Société EXXON). Conviennent aussi comme solvants, les esters aliphatiques, comme les esters méthyliques d'un mélange d'acides acétique, succinique et glutarique (mélange d'acides sous-produit de la synthèse du Nylon), les huiles comme l'huile de vaseline, et es solvants chlorés.

Bien évidemment, cette liste n'est donnée qu'à titre indicatif et ne saurait être exhaustive.

Ainsi que cela a été indiqué auparavant, les matières actives peuvent être mises en oeuvre telles quelles ou encore en présence d'un solvant organique. Plus particulièrement, ce solvant est choisi parmi les produits non solubles ou peu miscibles dans l'eau.

Par exemple, on peut mentionner les huiles minérales, les mono- di- et triglycérides d'acides gras saturés ou insaturés ; il peut s'agir de triglycérides de synthèse ou naturels, les coupes pétrolières aromatiques, les composés terpéniques (D-limonène, L-limonène), les esters aliphatiques et les solvants chlorés.

Les granulés redispersables selon l'invention comprennent en outre au moins un tensio-actif principal dont le diagramme de phases binaire eau - tensio-actif comporte une phase isotrope fluide à 25°C jusqu'à une concentration d'au moins 50% en poids de tensio-actif, suivie, à des concentrations supérieures, d'une phase cristal liquide de type hexagonale, cubique ou lamellaire stable au moins jusqu'à 65°C.

La description de ces phases est donnée par exemple, dans l'ouvrage de R.G. LAUGHLIN intitulé "The AQUEOUS PHASE BEHAVIOR OF SURFACTANTS" - ACADEMIC PRESS - 1994. Leur identification par diffusion de rayonnements (X et neutrons) est décrite dans l'ouvrage de V. LUZZATI intitulé BIOLOGICAL MEMBRANES, PHYSICAL FACT AND FUNCTION" - ACADEMIC PRESS - 1968.

Plus particulièrement, la phase cristal liquide du tensio-actif principal est stable jusqu'à une température au moins égale à 60 °C. Selon un mode de réalisation préféré de l'invention, la phase cristal liquide est stable jusqu'à une température au moins égale à 55°C.

On précise ici que la phase isotrope fluide peut être coulée, tandis que la phase cristal liquide ne le peut pas.

Le tensio-actif principal peut être de type non ionique ou ionique.

Plus particulièrement, le tensio actif ionique est anionique.

Selon un premier mode de réalisation de l'invention, on met en oeuvre des tensio-actifs principaux présentant un diagramme de phases binaire tel que décrit ci-dessus et choisis parmi les tensio-actifs glycolipidiques ioniques, plus particulièrement anioniques.

Parmi les tensio-actifs glycolipidiques ioniques, on utilise plus particulièrement les dérivés des acides uroniques.

Les acides uroniques correspondants à la formule générale suivante, représentent un mode de réalisation particulièrement avantageux de l'invention : 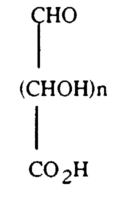 avec n représentant un nombre entier variant de 1 à 4.

Des exemples de composés de ce type sont notamment les acides galacturonique, glucuronique, D-mannuronique, L-iduronique et L-guluronique, sans toutefois être limité à ces acides.

La chaîne hydrocarbonée du tensio-actif, qui peut être substituée ou non, est une chaîne saturée ou non saturée comportant de 6 à 24 atomes de carbone et préférentiellement de 8 à 16 atomes de carbone.

On peut mettre en oeuvre de manière plus particulière des composés dérivant des acides galacturonique et glucuronique. La description de ces produits ainsi que leur procédé de préparation sont décrits notamment dans la demande de brevet EP-A-532 370.

Selon un mode de réalisation préféré de l'invention, on utilise en tant que tensio-actifs principaux, des dérivés de l'acide galacturonique sous forme de sels.

Plus particulièrement, le groupement hydroxyle porté par le carbone lié à l'oxygène endocyclique est remplacé par un groupement OR dans lequel R représente un radical alkyle, linéaire ou ramifié, ayant de 9 à 22 atomes de carbone.

Par ailleurs, le contre ion du sel dudit tensio-actif est un métal alcalin, un métal alcalino-terreux ou encore un groupement ammonium quaternaire dans lequel les radicaux liés à l'atome d'azote, identiques ou différents, sont choisis parmi l'hydrogène ou un radical alkyle ou hydroxyalkyle possédant 1 à 6 atomes de carbone.

Selon un second mode de réalisation préféré de la présente invention, on met en oeuvre un tensio-actif principal de type amphotère.

Les tensio-actifs amphotères convenables à la réalisation de l'invention ont plus particulièrement la formule générale suivante : 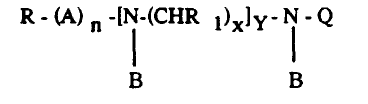 formule dans laquelle R représente un radical alkyle ou alcényle comprenant 7 à 22 atomes de carbone, R₁ représente un atome d'hydrogène ou un radical alkyle comprenant 1 à 6 atomes de carbone, A représente un groupement (CO) ou (OCH₂CH₂), n vaut 0 ou 1, x vaut 2 ou 3, y vaut 0 à 4, Q représente un radical -R₂ - COOM avec R₂ représentant un radical alkyle comprenant 1 à 6 atomes de carbone, M représente un atome d'hydrogène, un métal alcalin, un métal alcalino-terreux ou encore un groupement ammonium quaternaire dans lequel les radicaux liés à l'atome d'azote, identiques ou différents, sont choisis parmi l'hydrogène ou un radical alkyle ou hydroxyalkyle possédant 1 à 6 atomes de carbone, et B représente H ou Q.

De préférence, M représente un atome d'hydrogène, le sodium, le potassium et un groupement NH₄.

Selon un mode de réalisation particulier, on utilise des tensio-actifs de ce type comprenant au moins deux groupements carboxyliques. Ainsi, plus particulièrement, B représente le radical Q.

La fonction acide de ce composés peut se présenter indifféremment sous forme acide, sous forme salifiée, partiellement ou totalement.

Parmi ces tensio-actifs correspondants à la formule précédente, on met plus particulièrement en oeuvre les dérivés amphotères des alkyl polyamines comme l'amphionic XL®, le Mirataine H2C-HA® commercialisés par Rhône Poulenc ainsi que l'Ampholac 7T/X® et l'Ampholac 7C/X® commercialisés par Berol Nobel.

Selon un troisième mode de réalisation, on met en oeuvre un tensio-actif principal non-ionique dont la partie hydrophile contient un ou plusieurs motif(s) saccharide(s). Lesdits motifs saccharides contiennent généralement de 5 à 6 atomes de carbone. Ceux-ci peuvent dériver de sucres comme le fructose, le glucose, le mannose, le galactose, le talose, le gulose, l'allose, l'altose, l'idose, l'arabinose, le xylose, le lyxose et/ou le ribose.
Parmi ces agents tensio-actifs à structure saccharide, on peut mentionner les alkylpolyglycosides. Ceux-ci pouvent être obtenus par condensation (par exemple par catalyse acide) du glucose avec des alcools gras primaires (US-A-3 598 865; US-A-4 565 647; EP-A-132 043; EP-A-132 046;Tenside Surf. Det. 28, 419, 1991,3; Langmuir 1993, 9, 3375-3384...) présentant un groupe alkyle en C₄-C₂₀, de préférence en C₈-C₁₈, ainsi qu'un nombre moyen de motifs glucose de l'ordre 0,5 à 3, de préférence de l'ordre de 1,1 a 1,8 par mole d'alkylpolyglycoside (APG) : on peut mentionner notamment ceux présentant
. un groupe alkyle en C₈-C₁₄ et en moyenne 1,4 motif glucose par mole
. un groupe alkyle en C₁₂-C₁₄ et en moyenne 1,4 motif glucose par mole
. un groupe alkyle en C₈-C₁₄ et en moyenne 1,5 motif glucose par mole
. un groupe alkyle en C₈-C₁₀ et en moyenne 1,6 motif glucose par mole commercialisés respectivement sous les dénominations GLUCOPON 600 EC®, GLUCOPON 600 CSUP®, GLUCOPON 650 EC®, GLUCOPON 225 CSUP®, par HENKEL.

Les tensio-actifs principaux qui viennent d'être décrits, peuvent être utilisés seuls. On ne sortirait cependant pas du cadre de la présente invention en employant plusieurs tensio-actifs, appartenant ou non à la même catégorie.

Les granulés redispersables selon l'invention comprennent en outre au moins composé hydrosoluble.

Les composés hydrosolubles sont plus particulièrement choisis parmi des espèces minérales telles que les silicates de métal alcalin, les polymétaphosphates de métal alcalin.

Les silicates les plus avantageux dans ce type d'application, sont ceux présentant un rapport molaire Si0₂/M₂0 compris entre 1,6 et 3,5 avec M représentant un atome de sodium ou de potassium.

A titre d'exemple particulier de polymétaphosphate, on peut citer l'hexamétaphosphate de sodium.

Les composés hydrosolubles peuvent de même être choisis parmi des espèces organiques comme l'urée, les sucres et leurs dérivés.

Parmi les sucres et leurs dérivés, on peut mentionner les oses (ou monosaccharides), les osides, les polyholosides fortement dépolymérisés. On entend des composés dont la masse moléculaire en poids est plus particulièrement inférieure à 20000 g/mole.

Les aldoses tels que le glucose, mannose, galactose et les cétoses tels que le fructose sont des exemples d'oses convenables à la présente invention.

Les osides sont des composés qui résultent de la condensation, avec élimination d'eau, de molécules d'oses entre elles ou encore de molécules d'oses avec des molécules non glucidiques. Parmi les osides on préfère les holosides qui sont formés par la réunion de motifs exclusivement glucidiques et plus particulièrement les oligoholosides (ou oligosaccharides) qui ne comportent qu'un nombre restreint de ces motifs, c'est-à-dire un nombre en général inférieur ou égal à 10. A titre d'exemples d'oligoholosides on peut mentionner le saccharose, le lactose, la cellobiose, le maltose.

Les polyholosides (ou polysaccharides) fortement dépolymérisés convenables sont décrits par exemple dans l'ouvrage de P. ARNAUD intitulé "cours de chimie organique", GAUTHIER-VILLARS éditeurs, 1987. Plus particulièrement, on met en oeuvre des polyholosides dont la masse moléculaire en poids est plus particulièrement inférieures à 20000 g/mole.

A titre d'exemple non limitatif de polyholosides fortement dépolymérisés, on peut citer le dextran, l'amidon, la gomme xanthane et les galactomannanes tels que le guar ou la caroube. Ces polysaccharides présentent de préférence un poids de fusion supérieur à 100°C et une solubilité dans l'eau comprise entre 50 et 500 g/l.

Conviennent également les polyélectrolytes de nature organique issus de la polymérisation de monomères qui ont la formule générale suivante : 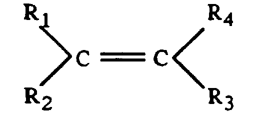 formule dans laquelle Rᵢ, identiques ou différents, représentent H, CH₃, CO₂H, (CH₂)ₙ-CO₂H avec n = 0 à 4.

A titre d'exemples non limitatifs de composés de ce type, on peut citer les acides acrylique, métacrylique, maléique, fumarique, itaconique, crotonique.

Conviennent également à l'invention, les copolymères obtenus à partir des monomères répondant à la formule générale précédente et ceux obtenus à l'aide de ces monomères et d'autres monomères, en particulier les dérivés vinyliques comme les alcools vinyliques et les vinyl amides telle que la vinylpyrrolidinone. On peut également citer les copolymères obtenus à partir d'alkyle vinyl ether et d'acide maléique ainsi que ceux obtenus à partir de vinyl styrène et d'acide maléique qui sont notamment décrits dans l'encyclopédie KIRK-OTHMER intitulé "ENCYCLOPEDIA OF CHEMICAL TECHNOLOGY" - Volume 18 - 3 ème édition - Wiley interscience publication - 1982.

Conviennent également à l'invention les polymères peptidiques dérivés de la polycondensation d'acides aminés, notamment de l'acide aspartique et glutamique ou des précurseurs des diaminodiacides. Ces polymères peuvent être aussi bien des hydrolysats d'homopolymères dérivés de l'acide aspartique ou glutamique que des copolymères dérivés de l'acide aspartique et de l'acide glutamique en proportions quelconques, ou des copolymères dérivés de l'acide aspartique et/ou glutamique et d'aminoacides autres. Parmi les aminoacides copolymérisables, on peut citer la glycine, l'alanine, la leucine, l'isoleucine, la phényl alanine, la méthionine, l'histidine, la proline, la lysine, la sérine, la thréonine, la cystéine...

Les polyélectrolytes préférés présentent un degré de polymérisation faible. Les masses moléculaires en poids de ces macromolécules sont plus particulièrement inférieures à 20000 g/mole et, préférentiellement comprises entre 1000 et 5000 g/mole.

Bien entendu, il est tout à fait envisageable d'utiliser ces différents types de composés hydrosolubles en combinaison.

Selon une seconde variante de l'invention, le composé hydrosolubles est choisi parmi les tensio-actifs principaux. Tout ce qui a été écrit à leur propos ne sera pas repris ici.

Les granulés redispersables de la présente invention peuvent contenir en outre au moins un tensio-actif supplémentaire ionique.

Les tensio-actifs supplémentaires ioniques peuvent plus particulièrement être des agents tensio-actifs amphotères comme les alkyl-bétaines, les alkyldiméthylbétaïnes, les alkylamidopropylbétaines, les alkylamidopropyldiméthylbétaïnes, les alkyltriméthyl-sulfobétaïnes, les dérivés d'imidazoline tels que les alkylamphoacétates, alkylamphodiacétates, alkylampho-propionates, alkylamphodipropionates, les alkylsultaïnes ou les alkylamidopropyl-hydroxysultaïnes, les produits de condensation d'acides gras et d'hydrolysats de protéines.

On peut de même utiliser des agents tensio-actifs supplémentaires anioniques, tels que les sels hydrosolubles d'alkylsulfates, d'alkyléthersulfates, les alkyliséthionates et les alkyltaurates ou leurs sels, les alkylcarboxylates, les alkylsulfosuccinates ou les alkylsuccinamates, les alkylsarcosinates, les dérivés alkylés d'hydrolysats de protéines, les acylaspartates, les phosphates esters d'alkyle et/ou d'alkyléther et/ou d'alkylaryléther. Le cation est en général un métal alcalin ou alcalino-terreux, tels que le sodium, le potassium, le lithium, le magnésium, ou un groupement ammonium NR₄⁺ avec R, identiques ou différents, représentant un radical alkyle substitué ou non par un atome d'oxygène ou d'azote.

Il est possible d'ajouter aux granulés redispersables selon l'invention, tout additif classique selon le domaine d'application de ces derniers.

Comme cela a été indiqué auparavant, les granulés redispersables selon l'invention, présentent des teneurs élevées en matière active.

La teneur en matière active hydrophobe représente au moins 20% du poids du granulé ; elle est de préférence comprise entre 40 et 90 parties en poids pour 100 parties en poids du granulé.

Selon un mode de réalisation particulier de l'invention, la teneur en matière active est supérieure à 50 parties en poids. De préférence, cette teneur est d'au moins 70 parties en poids.

La quantité de tensio-actif principal est comprise entre 1 et 40 parties en poids, de préférence entre 1 et 30 parties en poids pour 100 parties en poids du granulé.

La quantité de composé hydrosoluble est comprise entre 7 et 50 parties en poids dans le granulé. Selon une variante particulière, cette quantité est comprise entre 8 et 30 parties en poids.

Le rapport pondéral des concentrations entre le tensio-actif principal et le composé hydrosoluble est compris entre 20 / 80 - 90 / 10.

S'ils sont identiques, c'est-à-dire si les granulés selon l'invention comprennent au moins un tensio-actif principal jouant à la fois le rôle de tensio-actif et celui de composé hydrosoluble, la quantité totale de ce composé correspond bien entendu à la somme des deux gammes précitées.

Dans le cas où les granulés redispersables de l'invention comprennent au moins un tensio-actif supplémentaire, le rapport pondéral des concentrations entre le tensio-actif principal et le tensio-actif supplémentaire est compris entre 5 et 10.

Le procédé de préparation des granulés redispersables va maintenant être décrit.

Le procédé consiste dans une première étape à préparer une émulsion dans l'eau d'au moins une matière active, d'au moins un tensio-actif principal, d'au moins un composé hydrosoluble.

L'émulsion peut aussi comprendre au moins un tensio-actif supplémentaire si un tel composé est employé.

Bien évidemment, dans le cas où des additifs classiques sont utilisés, on peut les ajouter lors de la formation de l'émulsion.

On peut mettre en oeuvre toutes les méthodes de préparation d'émulsions connues de l'homme du métier et qui sont décrites dans "ENCYCLOPEDIA of EMULSIONS TECHNOLOGY", volumes 1 à 3 de Paul BECHER édités par MARCEL DEKKER INC., 1983.

Ainsi, la méthode dite d'émulsification en phase directe convient à la préparation des granulés selon l'invention. Il est rappelé brièvement que cette méthode consiste à préparer un mélange contenant l'eau et le ou les tensio-actifs, y compris le composé hydrosoluble, puis à introduire la matière active sous forme liquide, sous agitation.

Une autre méthode convenable est l'émulsification par inversion de phases. Selon cette voie, on mélange la matière active avec le tensio-actif principal, et l'on introduit goutte à goutte et sous agitation, l'eau qui peut contenir les autres constituants tels que le composé hydrosoluble par exemple. A partir d'une certaine quantité d'eau introduite, il se produit une inversion de l'émulsion. On obtient alors une émulsion directe huile dans eau. On dilue ensuite l'émulsion obtenue dans l'eau de manière à obtenir une fraction volumique en phase dispersée appropriée.

On peut enfin préparer l'émulsion en mettant en oeuvre des broyeurs colloïdaux tels que MENTON GAULIN® et MICROFLUIDIZER® (MICROFLUIDICS).

La granulométrie moyenne de l'émulsion est en général comprise entre 0,1 et 10 µm et préférentiellement entre 0,2 et 5 µm.

Selon une variante de l'invention, on prépare au préalable un mélange comprenant l'eau et le solide hydrosoluble (préémulsion).

L'émulsification peut être réalisée à une température voisine de la température ambiante, bien que des températures plus faibles ou plus élevées soient envisageables.

La quantité de matière sèche de l'émulsion est généralement comprise entre 10 et 70 % en poids et préférentiellement entre 40 et 60% en poids.

Les teneurs respectives des divers constituants sont choisies de telle sorte que les granulés séchés présentent la composition définie auparavant.

La seconde étape du procédé de préparation selon l'invention consiste à sécher l'émulsion ainsi formulée pour obtenir les granulés.

La méthode mise en oeuvre pour éliminer l'eau de l'émulsion et obtenir des granulés peut être effectuée par tout moyen connu de l'homme du métier. Cependant, selon une réalisation particulière de l'invention, on met en oeuvre une méthode de séchage rapide de l'émulsion.

Conviennent à ce titre la lyophilisation, qui correspond à une étape de congélation, suivie d'une étape de sublimation, ou bien encore le séchage par atomisation.

Ces modes de séchage, et plus particulièrement le dernier, sont particulièrement indiqués car ils permettent de conserver l'émulsion en l'état et d'obtenir directement des granulés.

Le séchage par atomisation peut s'effectuer de manière habituelle dans tout appareil connu tel que par exemple une tour d'atomisation associant une pulvérisation réalisée par une buse ou une turbine avec un courant de gaz chaud, dans des conditions telles que que la température du produit au cours du séchage soit d'au moins 55°C.

Il est à noter que des additifs, tels que les agents antimottants peuvent être incorporés aux granulés au moment de cette seconde étape de séchage. On recommande d'utiliser une charge choisie notamment parmi le carbonate de calcium, le sulfate de baryum, le kaolin, la silice, la bentonite, l'oxyde de titane, le talc, l'alumine hydratée et le sulfoaluminate de calcium.

Des exemples concrets mais non limitatifs vont maintenant être présentés.

### EXEMPLE 1

On prépare une émulsion de composition suivante :

| Composition | % poids |
|---|---|
| huile de vaseline | 36 |
| décyl D-galactoside uronate de sodium* | 4 |
| eau | 60 |

| | |
|---|---|
| (*) Le décyl D-galactoside uronate de sodium est commercialisé par la société ARD. Le diagramme de phase binaire eau/tensio-actif comporte une phase isotrope fluide à 25°C jusqu'à une concentration de 60% en poids de tensio-actif suivi d'une phase cristal liquide de type hexagonale. Cette phase hexagonale a été identifiée et caractérisée par diffusion des rayons X aux petits angles, conformément à l'ouvrage de V. LUZZATI intitulé "BIOLOGICAL MEMBRANES, PHYSICAL FACT AND FUNCTION", à partir d'une solution aqueuse contenant 62% en poids de tensio-actif. Le spectre de diffusion X aux petits angles contient deux raies fines dont les espacements de BRAGG sont dans les rapports 1 : 1/ (3)^{1/2}. Le paramètre de maille obtenu en mesurant les espacements des raies est égal à 47 Angstroems. | |

On réalise au préalable une préémulsion à l'aide d'un ULTRA-TURRAX® (IKA) par introduction de l'huile de vaseline dans l'eau contenant le tensio-actif. L'émulsion est ensuite introduite dans un broyeur colloïdal de type MICROFLUIDIZER-M11OT®. La taille moyenne de l'émulsion mesurée à l'aide du granulomètre laser SYMPATEC® est de 0,5 µm.

L'émulsion résultante est séchée au moyen d'un atomiseur de laboratoire type BUCHI®, avec une température d'entrée des gaz (air) de 110°C.

On obtient des granulés présentant 90% en poids d'huile.

La mise en contact des granulés avec l'eau entraîne leur dispersion spontanée et la formation d'une émulsion, qui après examen au microscope, présente une granulométrie voisine de celle de l'émulsion de départ.

### EXEMPLE 2

On prépare une émulsion de composition suivante :

| Composition | % poids |
|---|---|
| huile de vaseline | 36 |
| alkyl polyaminocarboxylate* | 14 |
| eau | 50 |

| | |
|---|---|
| (*) L'alkyl polyaminocarboxylate est commercialisé sous le nom de AMPHIONIC XL par Rhône-Poulenc. Ce tensio-actif est en solution dans l'eau et présente un extrait sec égal à 40% en poids. Le diagramme de phases binaire eau/tensio-actif comporte une phase isotrope fluide à 25°C jusqu'à une concentration de 50% en poids de tensio-actif, suivie d'une phase cristal liquide visqueuse optiquement isotrope de type cubique. Cette phase a été identifiée et caractérisée par diffusion des rayons X aux petits angles dans une solution aqueuse contenant 52% de tensio-actif. Le spectre de diffusion X aux petits angles contient une série de cinq raies caractéristiques. | |

On réalise au préalable une préémulsion à l'aide d'un ULTRA-TURRAX® (IKA) par introduction de l'huile de vaseline dans l'eau contenant le tensio-actif. L'émulsion est ensuite introduite dans un broyeur colloïdal de type MICROFLUIDIZER-M11OT®.

L'émulsion résultante est séchée au moyen d'un atomiseur de laboratoire type BUCHI®, avec une température d'entrée des gaz (air) de 110°C.

On obtient des granulés présentant 86,5 % en poids d'huile.

La mise en contact des granulés avec l'eau entraîne leur dispersion spontanée et la formation d'une émulsion, qui après examen au microscope, présente une granulométrie voisine de celle de l'émulsion de départ.

### EXEMPLE 3

| Composition | % poids |
|---|---|
| huile de vaseline | 32 |
| décyl D-galactoside uronate de sodium | 1,6 |
| lactose | 6,4 |
| eau | 60 |

| | |
|---|---|
| (*) Le décyl D-galactoside uronate de sodium est commercialisé par la société ARD. | |

On réalise au préalable une préémulsion à l'aide d'un ULTRA-TURRAX® (IKA) par introduction de l'huile de vaseline dans l'eau contenant le tensio-actif et l'oligosaccharide. L'émulsion est ensuite introduite dans un broyeur colloïdal de type MICROFLUIDIZER-M11OT®.

L'émulsion résultante est séchée au moyen d'un atomiseur de laboratoire de type BUCHI®, avec une température d'entrée des gaz (air) de 110°C.

On obtient des granulés présentant 80 % en poids d'huile.

La mise en contact des granulés avec l'eau entraîne leur dispersion spontanée et la formation d'une émulsion, qui après examen au microscope, présente une granulométrie voisine de celle de l'émulsion de départ.

### EXEMPLE 4

| Composition | % poids |
|---|---|
| huile silicone 47V300 | 33,3 |
| décyl D-galactoside uronate de sodium | 1,7 |
| urée | 1,7 |
| silicate de sodium | 13,3 |
| eau | 50 |

Le silicate de sodium présente un rapport SiO₂/Na₂O égal à 2. Il est en solution dans l'eau (extrait sec égal à 45% en poids).

On réalise au préalable une préémulsion à l'aide d'un ULTRA-TURRAX® (IKA) par introduction de l'huile silicone dans l'eau contenant le tensio-actif et les composés hydrosolubles. L'émulsion est ensuite introduite dans un broyeur colloïdal de type MICROFLUIDIZER-M11OT®.

On sèche l'émulsion obtenue au moyen d'un atomiseur de laboratoire de type BUCHI® avec une température d'entrée des gaz (air) de 110°C.

On obtient des granulés dont la teneur en huile est de 78% en poids.

La mise en contact des granulés avec l'eau entraîne leur dispersion spontanée et la formation d'une émulsion de granulométrie voisine de celle de l'émulsion de départ.

### EXEMPLE 5

On prépare une émulsion de composition suivante :

| Composition | % poids |
|---|---|
| huile silicone 47V300 | 40 |
| décyl D-galactoside uronate de sodium | 2 |
| urée | 2 |
| hexamétaphosphate de sodium | 6 |
| eau | 50 |

On réalise au préalable une préémulsion à l'aide d'un ULTRA-TURRAX® (IKA) par introduction de l'huile silicone dans l'eau contenant le tensio-actif et les composés hydrosolubles. L'émulsion est ensuite introduite dans un broyeur colloïdal de type MICROFLUIDIZER-M11OT®.

On sèche l'émulsion obtenue au moyen d'un atomiseur de laboratoire de type BUCHI® avec une température d'entrée des gaz (air) de 110°C.

On obtient des granulés dont la teneur en huile est de 80 % en poids.

La mise en contact des granulés avec l'eau entraîne leur dispersion spontanée et la formation d'une émulsion de granulométrie voisine de celle de l'émulsion de départ.

### EXEMPLE COMPARATIF

On prépare une émulsion de composition suivante :

| Composition | % poids |
|---|---|
| huile de vaseline | 36 |
| n-octyl-β-D-glucoside* | 4 |
| eau | 60 |

| | |
|---|---|
| (*) Le n-octyl-β-D-glucoside est commercialisé par la société Sigma. Le diagramme de phase binaire eau/tensio-actif comporte une phase isotrope fluide à 25°C jusqu'à une concentration de 60% en poids de tensio-actif, suivie d'une phase cristal liquide de type hexagonale stable jusqu'à une température de 22°C. Une phase cristal liquide de type cubique stable jusqu'à une température de 52°C, apparaît ensuite à une concentration de 75 % en poids de tensio-actif. | |

On réalise au préalable une préémulsion à l'aide d'un ULTRA-TURRAX® par introduction de l'huile de vaseline dans l'eau contenant le tensio-actif. L'émulsion est ensuite introduite dans un broyeur colloïdal de type MICROFLUIDIZER-M11OT®. La taille moyenne de l'émulsion mesurée à l'aide du granulomètre laser SYMPATEC® est de 0,5 µm.

Cette émulsion ne peut pas être séchée sans éviter une coalescence massive et l'on ne peut pas obtenir de granulés.

### EXEMPLE 6

On prépare dans un premier réacteur de 2 litres, muni d'un agitateur à pale cadre, un mélange de
- 100 parties en poids de solution de silicate de sodium, présentant un rapport molaire SiO2/Na2O de 2 et un extrait sec de 45%
- et 100 parties en poids de GLUCOPON 600 CSUP à 50% d'extrait sec.
Le mélange obtenu est introduit goutte à goutte, sous agitation à 500 tours/minute, dans un deuxième réacteur de 2 litres, muni d'un agitateur à pale cadre, contenant 65g d'anti-mousse silicone RHODORSIL 20472.
La conductimétrie du milieu est suivie pendant toute l'opération.
Au point d'inversion de phase (observation d'une augmentation brutale de la conductimétrie), on arrête l'addition de solution de silicate et de GLUCOPON 600 CSUP.
On continue à agiter pendant quelques minutes.
On obtient une émulsion de taille moyenne de 2µm, dont la composition est la suivante :
- 14,9% de silicate exprimé en sec
- 33,6% d'anti-mousse
- 16,6% de GLUCOPON 600 CSUP, exprimé en sec
- le complément à 100% d'eau
Cette émulsion est ensuite séchée sur plaque de verte en étuve à 80°C, pendant une journée.
Le produit obtenu est broyable ; on obtient une poudre redispersable dans l'eau sous forme d'une émulsion.

### EXEMPLE 7

Matières premières utilisées :
- polyacrylate de masse 20000 contenant 15% d'eau
- GLUCOPON 600 CSUP à 50% d'extrait sec
- anti-mousse silicone RHODORSIL 20472
On prépare une solution à 40% d'extrait sec de polyacrylate, par dissolution de 150g de polyacrylate dans 100g d'eau.
Selon le mode opératoire de l'exemple 6, on prépare un mélange de 50g de GLUCOPON 600 CSUP et de 200g de polyacrylate, mélange que l'on ajoute petit à petit à 100g de RHODORSIL 20472, jusqu'à inversion de phase.
La composition de l'émulsion obtenue est la suivante :
- 16,6% de polyacrylate exprimé en sec
- 38,7% d'anti-mousse
- 6,1% de GLUCOPON 600 CSUP, exprimé en sec
- le complément à 100% d'eau
Cette émulsion est ensuite séchée sur plaque de verte en étuve à 80°C, pendant une journée.
Le produit obtenu est broyable : on obtient une poudre ayant la composition suivante :
- 29,9% de polyacrylate sec
- 59,2% d'anti-mousse
- 9,3% de GLUCOPON 600 CSUP sec
- 1,5% d'eau
Cette poudre est redispersable dans l'eau sous forme d'une émulsion.

## Revendications

1. Granulés redispersables dans l'eau, obtenus par séchage d'une émulsion huile dans eau comprenant :
- au moins une matière active sous forme de liquide hydrophobe,
- au moins un composé hydrosoluble susceptible de former au cours de l'opération de séchage un film continu solide emprisonnant les gouttelettes de matière active hydrophobe
- de l'eau
- et au moins un agent tensio-actif principal dont le diagramme de phases binaire eau-agent tensio-actif, comporte une phase isotrope fluide à 25°C jusqu'à une concentration d'au moins 50 % en poids de tensio-actif, suivie, à des concentrations supérieures, d'une phase cristal liquide de type hexagonale, cubique ou lamellaire stable au moins jusqu'à 65°C.

2. Granulés selon la revendication 1, caractérisés en ce que le tensio-actif princial est un tensio-actif ionique.

3. Granulés selon une des revendication 2, caractérisés en ce que le tensio-actif principal est un tensio-actif anionique.

4. Granulés selon la revendication précédente, caractérisés en ce que le tensio-actif principal est choisi parmi les tensio-actifs glycolipidiques anioniques.

5. Granulés selon la revendication 4, caractérisés en ce que le tensio-actif glycolipidique est choisi parmi les dérivés de acides uroniques.

6. Granulés selon la revendication 1, caractérisés en ce que le tensio-actif principal est choisi parmi les tensio-actifs amphotères de formule générale suivante : 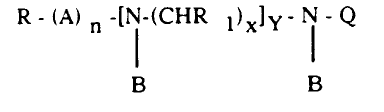 formule dans laquelle R représente un radical alkyle ou alcényle comprenant 7 à 22 atomes de carbone, R₁ représente un atome d'hydrogène ou un radical alkyle comprenant 1 à 6 atomes de carbone, A représente un groupement (CO) ou (OCH₂CH₂), n vaut 0 ou 1, x vaut 2 ou 3, y vaut 0 à 4, Q représente un radical -R₂ - COOM avec R₂ représentant un radical alkyle comprenant 1 à 6 atomes de carbone, M représente un atome d'hydrogène, un métal alcalin, un métal alcalino-terreux ou encore un groupement ammonium quaternaire dans lequel les radicaux liés à l'atome d'azote, identiques ou différents, sont choisis parmi l'hydrogène ou un radical alkyle ou hydroxyalkyle possédant 1 à 6 atomes de carbone, et B représente H ou Q.

7. Granulés selon la revendication 6, caractérisés en ce que le tensio-actif amphotère comprend au moins deux groupements carboxyliques.

8. Granulés selon la revendication 1, caractérisés en ce que le tensio-actif principal est un tensio-actif non-ionique.

9. Granulés selon la revendication 8, caractérisés en ce que le tensio-actif non-ionique présente une partie hydrophile contenant un ou plusieurs motif(s) saccharide(s) contenant de 5 à 6 atomes de carbone

10. Granulés selon la revendication 9, caractérisés en ce que le tensio-actif non-ionique à structure saccharide est un alkylpolyglucoside.

11. Granulés selon l'une quelconque des revendications précédentes, caractérisés en ce que le composé hydrosoluble est choisi parmi les espèces minérales telles les silicates de métal alcalin, les polymétaphosphates de métal alcalin.

12. Granulés selon l'une quelconque des revendications 1 à 10, caractérisés en ce que le composé hydrosoluble est choisi parmi des espèces organiques comme l'urée, les sucres ou leurs dérivés.

13. Granulés selon la revendication précédente, caractérisés en ce que les sucres et leurs dérivés sont choisis parmi les oses, les osides, les polyholosides fortement dépolymérisés.

14. Granulés selon l'une quelconque des revendications 1 à 10, caractérisés en ce que le composé hydrosoluble est choisi parmi les polyélectrolytes de nature organique issus de la polymérisation de monomères qui ont la formule générale suivante : 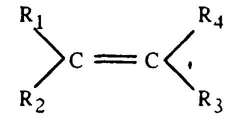 formule dans laquelle Ri, identiques ou différents, représentent H, CH₃, CO₂H, (CH₂)ₙ-CO₂H avec n = 0 à 4.

15. Granulés selon l'une quelconque des revendications 1 à 10, caractérisés en ce que le composé hydrosoluble est choisi parmi les tensio-actifs principaux.

16. Granulés selon l'une quelconque des revendications précédentes, caractérisés en ce qu'ils peuvent comprendre en outre au moins un tensio-actif supplémentaire ionique.

17. Granulés selon l'une quelconque des revendications précédentes, caractérisés en ce que la teneur en matière active est d'au moins 20 parties, de préférence comprise entre 40 et 90 parties en poids pour 100 parties de granulés.

18. Granulés selon l'une quelconque des revendications précédentes, caractérisés en ce que la quantité de tensio-actif principal est comprise entre 1 et 40 parties en poids, de préférence entre 1 et 30 parties en poids pour 100 parties en poids de granulés.

19. Granulés selon l'une quelconque des revendications précédentes, caractérisés en ce que la quantité de composé hydrosoluble est comprise entre 7 et 50 parties en poids pour 100 parties en poids de granulés.

20. Granulés selon l'une quelconque des revendications précédentes, caractérisés en ce que le rapport pondéral des concentrations entre le tensio-actif principal et le tensio-actif supplémentaire est compris entre 5 et 10.

21. Granulés selon l'une quelconque des revendications précédentes, caractérisés en ce que le rapport pondéral des concentrations entre le tensio-actif principal et le composé hydrosoluble est compris entre 20 / 80 - 90 / 10.

22. Granulés selon l'une quelconque des revendications précédentes, caractérisés en ce que l'émulsion comprend 10 à 70 % en poids de matières sèches.

23. Granulés selon l'une quelconque des revendications précédentes, caractérisés en ce que le séchage est effectué par atomisation.

## Claims

1. Water-redispersible granules obtained by drying an oil-in-water emulsion comprising:
• at least one active ingredient in the form of a hydrophobic liquid;
• at least one water-soluble compound which is capable of forming, during the drying operation, a continuous solid film imprisoning the droplets of hydrophobic active ingredient;
• water; and
• at least one principal surfactant for which the water-surfactant binary phase diagram comprises an isotropic fluid phase at 25°C up to a concentration of at least 50% by weight of surfactant followed, at higher concentrations, by a hexagonal, cubic or lamellar liquid crystal phase which is stable up to at least 65°C.

2. Granules according to claim 1, characterized in that the principal surfactant is an ionic surfactant.

3. Granules according to claim 2, characterized in that the principal surfactant is an anionic surfactant.

4. Granules according to the preceding claim, characterized in that the principal surfactant is selected from anionic glycolipid surfactants.

5. Granules according to claim 4, characterized in that the glycolipid surfactant is selected from uronic acid derivatives.

6. Granules according to claim 1, characterized in that the principal surfactant is selected from amphoteric surfactants with the following general formula: 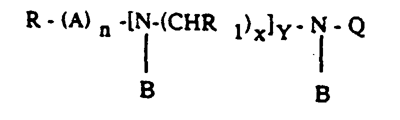 where R represents an alkyl or alkenyl radical containing 7 to 22 carbon atoms, R₁ represents a hydrogen atom or an alkyl radical containing 1 to 6 carbon atoms, A represents a (CO) group or a (OCH₂CH₂) group, n is 0 or 1, x is 2 or 3, y is 0 to 4, Q represents a radical R₂-COOM where R₂ represents an alkyl radical containing 1 to 6 carbon atoms, M represents a hydrogen atom, an alkali metal, an alkaline-earth metal or a quaternary ammonium group in which the radicals bonded to the nitrogen atom, which may be identical or different, are selected from hydrogen or an alkyl or hydroxyalkyl radical containing 1 to 6 carbon atoms, and B represents H or Q.

7. Granules according to claim 6, characterized in that the amphoteric surfactant comprises at least two carboxyl groups.

8. Granules according to claim 1, characterized in that the principal surfactant is a non ionic surfactant.

9. Granules according to claim 8, characterized in that the non ionic surfactant exhibits a hydrophilic portion containing one or more saccharide moieties containing 5 or 6 carbon atoms.

10. Granules according to claim 9, characterized in that the non ionic surfactant with a saccharide structure is an alkylpolyglucoside.

11. Granules according to any one of the preceding claims, characterized in that the water-soluble compound is selected from mineral species such as alkali metal silicates and alkali metal polymetaphosphates.

12. Granules according to any one of claims 1 to 10, characterized in that the water-soluble compound is selected from organic species such as urea, sugars or derivatives thereof.

13. Granules according to the preceding claim, characterized in that the sugars and their derivatives are selected from oses, osides and highly depolymerised polyholosides.

14. Granules according to any one of claims 1 to 10, characterized in that the water-soluble compound is selected from organic polyelectrolytes originating from polymerisation of monomers which have the following general formula: 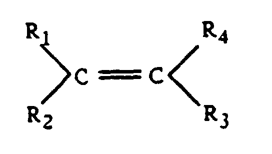 where Rᵢ, which may be identical or different, represents H, CH₃, COOH or (CH₂)ₙ-COOH where n = 0 to 4.

15. Granules according to any one of claims 1 to 10, characterized in that the water-soluble compound is selected from the principal surfactants.

16. Granules according to any one of the preceding claims, characterized in that they may also comprise at least one supplemental ionic surfactant.

17. Granules according to any one of the preceding claims, characterized in that the amount of active ingredient is at least 20 parts, preferably in the range 40 to 90 parts by weight per 100 granule parts.

18. Granules according to any one of the preceding claims, characterized in that the amount of principal surfactant is in the range 1 to 40 parts by weight, preferably in the range 1 to 30 parts by weight per 100 granule parts by weight.

19. Granules according to any one of the preceding claims, characterized in that the amount of water-soluble compound is in the range 7 to 50 parts by weight per 100 granule parts by weight.

20. Granules according to any one of the preceding claims, characterized in that the ratio of the concentrations of the principal surfactant to the supplemental surfactant is in the range 5 to 10 by weight.

21. Granules according to any one of the preceding claims, characterized in that the ratio of the concentrations of the principal surfactant to the water-soluble compound is in the range 20/80 to 90/10 by weight.

22. Granules according to any one of the preceding claims, characterized in that the emulsion comprises 10% to 70% by weight of dry matter.

23. Granules according to any one of the preceding claims, characterized in that drying is carried out by spraying.

## Patentansprüche

1. In Wasser wiederdispergierbare Granulate, erhalten durch Trocknung einer Öl-in-Wasser-Emulsion aus:
- mindestens einem Wirkstoff in Form einer hydrophoben Flüssigkeit,
- mindestens einer wasserlöslichen Verbindung, die während des Trocknungsprozesses einen durchgehenden festen Film bilden kann, der die Tröpfchen des hydrophoben Wirkstoffs einschließt,
- Wasser,
- und mindestens einem Haupttensid, dessen binäres Phasendiagramm Wasser/grenzflächenaktives Mittel bei 25 °C eine isotrope Flüssigkeitsphase bis zu einer Tensidkonzentration von mindestens 50 Gew.-% aufweist, bei höheren Konzentrationen gefolgt von einer Flüssigkristallphase vom hexagonalen, kubischen oder lamellaren Typus, die mindestens bis 65 °C beständig ist.

2. Granulate nach Anspruch 1, dadurch gekennzeichnet, daß das Haupttensid ein ionisches Tensid ist.

3. Granulate nach Anspruch 1 oder 2, dadurch gekennzeichnet, daß das Haupttensid ein Aniontensid ist.

4. Granulate nach dem vorangehenden Anspruch, dadurch gekennzeichnet, daß das Haupttensid aus den glykolipidischen Aniontensiden ausgewählt wird.

5. Granulate nach Anspruch 4, dadurch gekennzeichnet, daß das glykolipidische Tensid aus den Derivaten der Uronsäuren ausgewählt wird.

6. Granulate nach Anspruch 1, dadurch gekennzeichnet, daß das Haupttensid aus den Amphotensiden der folgenden allgemeinen Formel ausgewählt ist: 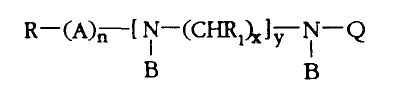 in der
- R ein Alkyl- oder Alkenylrest mit 7 bis 22 Kohlenstoffatomen,
- R₁ ein Wasserstoffatom oder ein Alkylrest mit 1 bis 6 Kohlenstoffatomen,
- A eine (CO)- oder (OCH₂CH₂)-Gruppe,
- n 0 oder 1,
- x 2 oder 3,
- y eine Zahl von 0 bis 4,
- Q ein (-R₂-COOM)-Rest bedeutet, in dem
* R₂ ein Alkylrest mit 1 bis 6 Kohlenstoffatomen,
* M ein Wasserstoffatom, ein Alkalimetall, ein Erdalkalimetall oder eine quaternäre Ammoniumverbindung ist, in der die gleichen oder veschiedenen an das Stickstoffatom gebundenen Reste aus Wasserstoff oder einem Alkyl- oder Hydroxyalkylrest, enthaltend 1 bis 6 Kohlenstoffatome, ausgewählt werden,
- B H oder Q bedeutet.

7. Granulate nach Anspruch 6, dadurch gekennzeichnet, daß das Amphotensid mindestens zwei Carboxylgruppen enthält.

8. Granulate nach Anspruch 1, dadurch gekennzeichnet, daß das Haupttensid ein nichtionisches Tensid ist.

9. Granulate nach Anspruch 8, dadurch gekennzeichnet, daß das nichtionische Tensid einen hydrophilen Teil aufweist, der eine oder mehrere Saccharideinheiten mit 5 bis 6 Kohlenstoffatomen enthält.

10. Granulate nach Anspruch 9, dadurch gekennzeichnet, daß das nichtionische, eine Saccharidstruktur aufweisende Tensid ein Alkylpolyglukosid ist.

11. Granulate nach irgendeinem der vorangehenden Ansprüche, dadurch gekennzeichnet, daß die wasserlösliche Verbindung aus anorganischen Verbindungen, wie Alkalisilikaten oder Alkalipolymetaphosphaten, ausgewählt ist.

12. Granulate nach irgendeinem der Ansprüche 1 bis 10, dadurch gekennzeichnet, daß die wasserlösliche Verbindung aus organischen Verbindungen, wie z.B. Harnstoff, Zucker oder ihren Derivaten, ausgewählt ist.

13. Granulate nach dem vorangehenden Anspruch, dadurch gekennzeichnet, daß die Zucker und ihre Derivate aus den Sacchariden, den Glykosiden und den stark depolymerisierten Polyholosiden ausgewählt sind.

14. Granulate nach irgendeinem der Ansprüche 1 bis 10, dadurch gekennzeichnet, daß die wasserlösliche Verbindung aus den Polyelektrolyten organischer Natur ausgewählt ist, die aus der Polymerisation von Monomeren der folgenden allgemeinen Formel hervorgegangen sind: 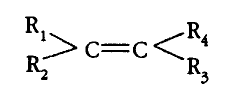 in der die Ri gleich oder verschieden H, CH₃, CO₂H oder (CH₂)ₙ-CO₂H mit n = 0 bis 4 bedeuten.

15. Granulate nach irgendeinem der Ansprüche 1 bis 10, dadurch gekennzeichnet, daß die wasserlösliche Verbindung aus den Haupttensiden ausgewählt ist.

16. Granulate nach irgendeinem der vorangehenden Ansprüche, dadurch gekennzeichnet, daß sie außerdem mindestens ein zusätzliches ionisches Tensid enthalten können.

17. Granulate nach irgendeinem der vorangehenden Ansprüche, dadurch gekennzeichnet, daß der Wirkstoffgehalt mindestens 20, vorzugsweise 40 bis 90 Gewichtsteile, bezogen auf 100 Gewichtsteile Granulat, beträgt.

18. Granulate nach irgendeinem der vorangehenden Ansprüche, dadurch gekennzeichnet, daß die Menge des Haupttensids zwischen 1 und 40, vorzugsweise zwischen 1 und 30 Gewichtsteilen, bezogen auf 100 Gewichtsteile Granulat, beträgt.

19. Granulate nach irgendeinem der vorangehenden Ansprüche, dadurch gekennzeichnet, daß die Menge der wasserlöslichen Verbindung zwischen 7 und 50 Gewichtsteilen, bezogen auf 100 Gewichtsteile Granulat, beträgt.

20. Granulate nach irgendeinem der vorangehenden Ansprüche, dadurch gekennzeichnet, daß das Gewichtsverhältnis der Konzentrationen zwischen dem Haupttensid und dem zusätzlichen Tensid zwischen 5 und 10 beträgt.

21. Granulate nach irgendeinem der vorangehenden Ansprüche, dadurch gekennzeichnet, daß das Gewichtsverhältnis der Konzentrationen zwischen dem Haupttensid und der wasserlöslichen Verbindung zwischen 20/80 und 90/10 beträgt.

22. Granulate nach irgendeinem der vorangehenden Ansprüche, dadurch gekennzeichnet, daß die Emulsion 10 bis 70 Gew.-% Trockensubstanz enthält.

23. Granulate nach irgendeinem der vorangehenden Ansprüche, dadurch gekennzeichnet, daß die Trocknung als Sprühtrocknung durchgeführt wird.
